# DEMANDE DE BREVET EUROPEEN

(11) **EP 0 655 380 A1**
(43) Date de publication de la demande: **31.05.1995**
(21) Numéro de dépôt: 94402662.4
(22) Date de dépôt: 22.11.1994
(51) Int. Cl.: B62D 1/16

(54) **Ensemble de colonne de direction, notamment de véhicule automobile**

(30) Priorité: 30.11.1993 FR 9314332
(71) Demandeur: ECIA - EQUIPEMENTS ET COMPOSANTS POUR L'INDUSTRIE AUTOMOBILE, F-25400 Audincourt (FR)
(72) Inventeur: Hoblingre, André, F-25700 Valentigney (FR)
(74) Mandataire: Habasque, Etienne Joel Jean-François

(57) **Abrégé**

Cet ensemble de colonne de direction notamment de véhicule automobile, du type comportant au moins à l'une de ses extrémités des moyens de fixation par vissage sur le reste de la structure du véhicule, est caractérisé en ce qu'il comporte des moyens (5) de centrage et d'accrochage sur le reste de la structure du véhicule, pour faciliter le montage des moyens de vissage et de l'ensemble sur le reste de la structure du véhicule.

## Description

La présente invention concerne un ensemble de colonne de direction notamment de véhicule automobile.

Dans la plupart des cas, ces ensembles de colonne de direction sont fixés sur le reste de la structure des véhicules automobiles, et plus particulièrement sous la planche de bord de ceux-ci, par l'intermédiaire de moyens de vissage.

C'est ainsi par exemple que l'on connaît dans l'état de la technique, des ensembles de colonne de direction qui comportent à proximité de chacune de leurs extrémités, des ferrures de montage munies de trous de passage de vis ou de goujons destinés à recevoir des écrous, permettant de fixer ces ensembles sur le reste de la structure des véhicules.

On connaît également dans l'état de la technique, des ensembles de colonne de direction qui comportent à proximité de l'une de leurs extrémités des moyens d'accrochage adaptés pour coopérer avec des moyens complémentaires du véhicule, tandis qu'à l'autre extrémité, ces ensembles comportent des ferrures de montage munies de trous de passage de moyens de serrage permettant de monter sous contrainte ces ensembles sur le reste de la structure des véhicules.

Cependant, tous ces ensembles présentent un certain nombre d'inconvénients, notamment au niveau de leur montage.

En effet, tous ces ensembles sont montés de la façon suivante :
1) mise en place de l'ensemble de colonne par un opérateur;
2) engagement des moyens de vissage;
3) mise en place d'un gabarit de centrage de l'ensemble; et
4) serrage final de l'ensemble sur le reste de la structure du véhicule par les moyens de vissage correspondants.

On conçoit que ces différentes opérations sont relativement difficiles à réaliser par un même opérateur, ce qui se traduit par un temps de montage relativement long.

Le but de l'invention est donc de résoudre ces problèmes en proposant un ensemble de colonne de direction qui soit simple, fiable et facile à monter sur le reste de la structure du véhicule.

A cet effet, l'invention a pour objet un ensemble de colonne de direction notamment de véhicule automobile, muni au moins à l'une de ses extrémités de moyens de fixation par vissage sur le reste de la structure du véhicule, caractérisé en ce qu'il comporte des moyens de centrage et d'accrochage sur le reste de la structure du véhicule, pour faciliter le montage des moyens de vissage et de l'ensemble sur le reste de la structure du véhicule.

Avantageusement, les moyens de centrage et d'accrochage comprennent au moins un téton en forme de crochet de l'un des éléments, ensemble de colonne ou reste de la structure du véhicule, adapté pour s'engager élastiquement dans un évidement correspondant de l'autre élément, reste de la structure du véhicule ou ensemble de colonne.

L'invention sera mieux comprise à la lecture de la description qui va suivre, donnée uniquement à titre d'exemple et faite en se référant aux dessins annexés, sur lesquels :
- la Fig.1 représente une vue de dessus d'un exemple de réalisation d'un ensemble de colonne de direction selon l'invention;
- la Fig.2 représente une vue partielle d'un exemple de réalisation de moyens de centrage et d'accrochage entrant dans la constitution d'un ensemble de colonne de direction selon l'invention; et
- la Fig.3 représente une vue en coupe prise suivant la ligne III-III de la Fig.2.

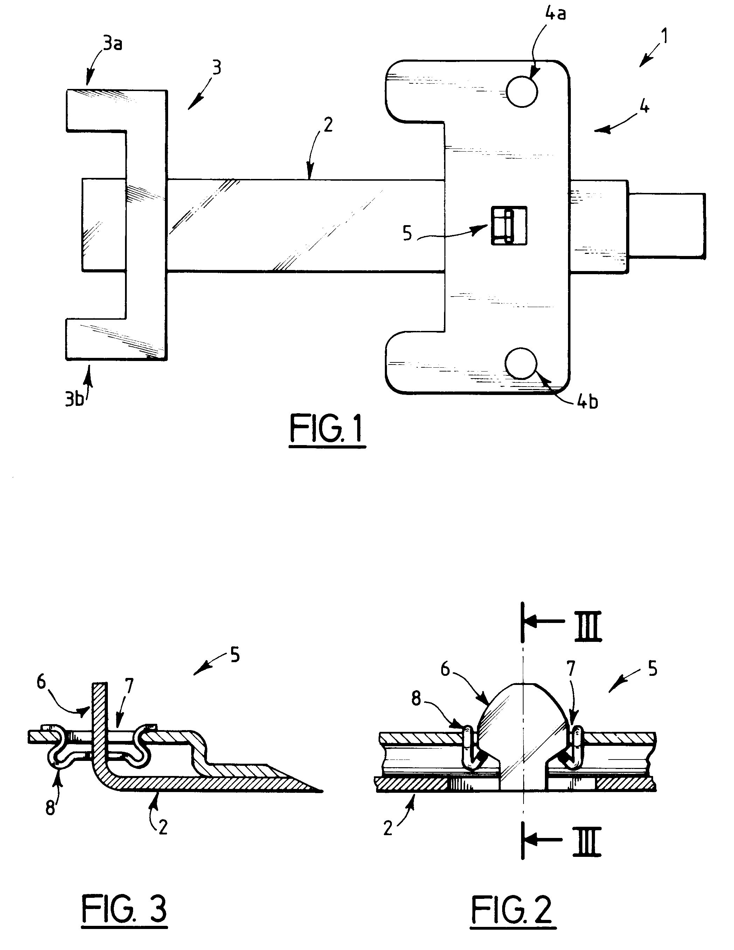

Ainsi qu'on peut le voir sur la Fig.1, un ensemble de colonne de direction selon l'invention, désigné par la référence générale 1, comporte de manière classique un corps de colonne 2 dans lequel est disposé un arbre de direction dont une extrémité est adaptée pour recevoir un volant de direction et dont l'autre extrémité est adaptée pour être reliée au reste du mécanisme de direction du véhicule.

Le corps 2 comporte par exemple à proximité de ses extrémités, des ferrures de montage 3 et 4 adaptées pour permettre la fixation de cet ensemble sur le reste de la structure du véhicule.

Dans l'exemple de réalisation représenté, l'une de ces ferrures, par exemple 3, comporte des organes en forme de pattes d'accrochage 3a et 3b adaptées pour s'engager dans des crochets solidaires de la structure du véhicule tandis que l'autre ferrure, par exemple 4, comporte des trous 4a,4b de passage de moyens de serrage par vissage de l'ensemble sur le véhicule.

On conçoit en effet que ces trous permettent le passage de vis ou de goujons pour permettre la fixation sous contrainte de cet ensemble sur le reste de la structure du véhicule.

On conçoit que le montage de cet ensemble sur le reste de la structure du véhicule n'est pas facile dans la mesure où l'opérateur de montage doit tout d'abord engager les pattes d'accrochage 3a et 3b dans les moyens complémentaires du reste de la structure du véhicule, puis maintenir l'ensemble de colonne en position pour permettre l'engagement des moyens de vissage.

Une fois cet engagement réalisé, il est nécessaire de mettre en place un gabarit de centrage avant obtenir la fixation définitive de l'ensemble sur le reste de la structure du véhicule.

Pour résoudre ces problèmes de montage, il est prévu dans l'ensemble de colonne de direction selon l'invention, des moyens de centrage et d'accrochage de l'ensemble de colonne sur le reste de la structure du véhicule pour faciliter le montage des moyens de vissage et de cet ensemble.

Ces moyens sont désignés par la référence générale 5 sur la figure 1 et sont disposés par exemple à proximité de l'une des extrémités de l'ensemble de colonne, au niveau de la ferrure de montage 4.

Ces moyens de centrage et d'accrochage comprennent par exemple comme on peut le voir sur les figures 2 et 3, au moins un téton en forme de crochet 6 relié à l'ensemble de colonne de direction et plus particulièrement au corps 2 de celui-ci et qui est adapté pour s'engager élastiquement dans un évidement 7 du reste de la structure du véhicule.

En effet, un organe élastique, tel que par exemple un jonc élastique 8, est disposé dans cet évidement pour assurer un accrochage élastique et le centrage de l'ensemble par rapport au reste de la structure du véhicule.

On conçoit alors que lorsque l'opérateur a engagé les moyens d'accrochage 3a,3b de la ferrure 3 dans les moyens complémentaires du reste de la structure du véhicule, et le téton en forme de crochet 6 dans l'évidement correspondant 7 de la structure du véhicule, l'ensemble de colonne est maintenu en position centrée sur le reste de la structure de sorte que l'opérateur dispose d'une grande liberté de mouvement pour l'engagement et le vissage définitif des moyens de serrage de l'ensemble sur le reste de la structure du véhicule.

Il va de soi bien entendu que différents modes de réalisation de ces moyens de centrage et d'accrochage peuvent être envisagés.

C'est ainsi par exemple que le téton en forme de crochet peut également être solidaire du reste de la structure du véhicule et être adapté pour s'engager dans un évidement de l'ensemble de colonne.

De même, ce téton en forme de crochet peut se présenter sous la forme d'un crochet déformable élastiquement et comporter des branches déformables élastiquement pour son engagement élastique dans l'évidement correspondant.

Bien entendu, les moyens d'accrochage et de centrage peuvent être disposés dans un emplacement de l'ensemble de colonne de direction différent de celui décrit en regard de la Fig.1.

C'est ainsi par exemple que ces moyens de centrage et d'accrochage peuvent comporter un élément en forme de crochet à chacune des extrémités de l'ensemble de colonne dans le cas où les ferrures de montage de cet ensemble sur le reste de la structure du véhicule comportent des trous de passage adaptés pour coopérer avec des moyens de vissage à chacune des extrémités de celui-ci.

## Revendications

1. Ensemble de colonne de direction notamment de véhicule automobile, du type comportant au moins à l'une de ses extrémités des moyens de fixation par vissage sur le reste de la carrosserie du véhicule, caractérisé en ce qu'il comporte des moyens (5) de centrage et d'accrochage sur le reste de la structure du véhicule, pour faciliter le montage des moyens de vissage et de l'ensemble sur le reste de la structure du véhicule.

2. Ensemble selon la revendication 1, caractérisé en ce que les moyens de centrage et d'accrochage comprennent au moins un téton en forme de crochet (6) solidaire de l'un des éléments, ensemble de colonne (1) ou reste de la structure du véhicule, et adapté pour s'engager élastiquement dans un évidement correspondant (7) de l'autre élément, reste de la structure du véhicule ou ensemble de colonne.

3. Ensemble selon la revendication 2, caractérisé en ce qu'un organe élastique (8) est disposé dans l'évidement (7).

4. Ensemble selon la revendication 2, caractérisé en ce que le téton se presente sous la forme d'un crochet déformable élastiquement.
